# EUROPÄISCHE PATENTSCHRIFT

(11) **EP 2 705 897 B1**
(45) Veröffentlichungstag und Bekanntmachung des Hinweises auf die Patenterteilung: **25.03.2015**
(21) Anmeldenummer: 13005666.6
(22) Anmeldetag: 11.12.2009
(51) Int. Cl.: B01D 71/78, C08J 7/18, B01D 67/00, B01D 69/12

(54) **ELEKTRONENSTRAHLINDUZIERTE MODIFIZIERUNG VON MEMBRANEN DURCH POLYMERE**
ELECTRON BEAM INDUCED MODIFICATION OF MEMBRANES BY POLYMERS
MODIFICATION DE MEMBRANES INDUITE PAR FAISCEAU ÉLECTRONIQUE À L'AIDE DE POLYMÈRES

(30) Priorität: 16.01.2009 DE 102009004848
(43) Veröffentlichungstag der Anmeldung: 12.03.2014
(62) Teilanmeldung aus: 09793468.1
(73) Patentinhaber: Sartorius Stedim Biotech GmbH, 37079 Göttingen (DE)
(72) Erfinder: Thom, Volkmar, 37083 Göttingen (DE); Hansmann, Björn, 37077 Göttingen (DE); Foster, Tobias, 50823 Köln (DE)
(74) Vertreter: Müller-Boré & Partner Patentanwälte PartG mbB

(56) Entgegenhaltungen:
- WO-A1-2005/002712
- TISCHER R: "Modifizierung von Membranoberflächen zur Verbesserung der Blutkompatibilität, Beschichtung von Dialysatoren mit PAA und PEMS", 20080604, 4. Juni 2008 (2008-06-04), Seiten 1-146, XP002527020,

## Beschreibung

Die vorliegende Erfindung betrifft ein Verfahren zur Herstellung einer mikroporösen Membran, auf deren Oberfläche ein durch Elektronenstrahlung vernetztes Polymer fixiert ist, umfassend das Bereitstellen einer mikroporösen Ausgangsmembran, das Imprägnieren der Membran mit einer Imprägnierlösung, umfassend ein Lösungsmittel sowie ein darin gelöstes oder dispergiertes Polymer, welches ein organischer Stoff ist, der eine mittlere Molmasse von mindestens 500 g/mol hat, und welches aus der Gruppe, bestehend aus perfluorierten Kohlenwasserstoffen sowie Gemischen davon, ausgewählt ist, um eine imprägnierte Membran bereitzustellen, und das Bestrahlen der imprägnierten Membran mit Elektronenstrahlung mit einer Dosis von 1 bis 300 kGy, um eine mikroporöse Membran, auf deren Oberfläche das durch Elektronenstrahlung vernetzte Polymer fixiert ist, bereitzustellen, sowie eine durch dieses Verfahren hergestellte mikroporöse Membran und die Verwendung einer derartigen Membran.

Für die praktischen Anwendungen von Membranfiltern ist es üblicherweise wünschenswert, wenn das Filtermaterial mechanisch stabil, thermisch und chemisch beständig und in gängigen (organischen) Lösemitteln unlöslich ist. Vor diesem Hintergrund kommen als Filtermaterialien häufig Polymere zum Einsatz, deren Oberflächeneigenschaften, wie die Benetzbarkeit mit Wasser oder die unspezifische Bindung (z. B. von Proteinen), nicht den Anforderungen im späteren Einsatz entsprechen. Zur Verbesserung der Oberflächeneigenschaften der mit diesen Polymeren hergestellten Membranfilter wurden in den letzten Jahrzehnten unterschiedliche Verfahren entwickelt, die Membranoberflächen permanent zu modifizieren. Wegen des Anspruchs der permanenten Modifizierung kommt eine einfache Imprägnierung der Membran mit einer Lösung etwa eines hydrophilen Polymers (für eine Hydrophilisierung einer hydrophoben Polymermembran) nicht in Frage, da dieses hydrophile Polymer leicht wieder von der Membran gewaschen werden kann. US-Patent 4,698,388 offenbart polymere Materialien, die mit einem Block-Copolymer beschichtbar sind, welches in Anwesenheit eines polymeren Peroxids aus zwei Sorten von Vinylmonomeren herstellbar ist, wobei das Polymer einer der beiden Sorten von Vinylmonomeren in den polymeren Materialien homogen dispergierbar ist und die andere Sorte hydrophile Homopolymere bildet. Die Dauerhaftigkeit der hydrophilen Modifizierung, z. B. charakterisiert durch die antistatischen Eigenschaften oder den elektrischen Oberflächenwiderstand, wird nur unter milden Bedingungen, d. h. durch zweistündiges Spülen mit Stadtwasser bei Raumtemperatur, getestet, weitere Aussagen zur Haltbarkeit der hydrophilen Modifizierung auf dem polymeren Material werden nicht gemacht. US-A-2003/148017 offenbart die Modifizierung von hydrophoben Dialysemembranen auf Poly(ether)sulfonbasis durch Adsorption von Copolymeren mit hydrophoben Polypropylenoxid-(PPO)-Segmenten und mit hydrophilen Polyethylenoxid-(PEO)-Segmenten, deren Abwaschen von der Membran in die Dialysat-Lösung bei der Hämodialyse unbedenklich, in der Sterilfiltration aber unerwünscht ist.

Zur permanenten Modifizierung von Membranfiltern aus Polymeren mit für bestimmte Filtrationsprozesse *a priori* ungeeigneten, hydrophoben Oberflächen wird in US-Patent 4,618,533 vorgeschlagen, poröse, hydrophobe Rohmembranen auf Basis von Poly(ether)sulfon oder Polyvinylidenfluorid mit einer Lösung eines Monomers (Hydroxyalkyl- oder Aminoalkylacrylate) und eines Initiators zu imprägnieren und anschließend die Polymerisation des Monomers durch Energiezufuhr zu initiieren, z. B. durch Erwärmung (thermische Initiierung) oder UV-Bestrahlung (unter Verwendung eines Fotoinitiators). Durch die Polymerisation werden langkettige, vernetzte Polymerketten im Inneren der porösen Matrix gebildet, die sich nicht von der Membran waschen lassen und teilweise auch auf die Membran aufgepfropft sind, woraus eine permanente Modifizierung resultiert. Wegen der Giftigkeit und kanzerogenen Wirkung der verwendeten Monomere (Acrylate, Methacrylate und andere vinylische Monomere) besteht bei diesen Verfahren aber die Schwierigkeit, sicherzustellen, dass keine nach der Modifizierung in der Membran verbliebenen, unumgesetzten Monomere in der späteren Anwendung, beispielsweise in das Filtrat, freigesetzt werden. Die Reduktion des Gehalts an extrahierbaren Bestandteilen auf das erlaubte Maß erfordert im Allgemeinen einen hohen, kosten- und zeitintensiven Spülaufwand nach der Modifizierung. Darüber hinaus erfordert das Modifizierungsverfahren den Umgang mit giftigen und kanzerogenen Verbindungen im Produktionsablauf sowie die Entsorgung der dabei entstehenden Abfall- und Reststoffe. Der Einsatz dieser Verbindungen erscheint damit nicht nur unter Kosten-, Umwelt- und Gesundheitsgesichtspunkten zweifelhaft, sondern insbesondere auch vor dem Hintergrund strenger werdender Umweltauflagen ("Reach"-Vorschriften).

Eine Alternative zum Einsatz der genannten, häufig toxisch bedenklichen Monomere stellt die Verwendung sogenannter Präpolymere dar, d. h. von Polymeren, die reaktionsfähige funktionelle Gruppen enthalten. US-Patent 5,629,084 offenbart die Imprägnierung von Basismembranen aus Polyvinylidendifluorid, Polytetrafluorethen, Polyethen und Polypropen mit einer Lösung aus Präpolymeren unter Einsatz eines die Polymerisation einleitenden Radikalinitiators. Ein Vernetzer wird nicht eingesetzt und die Vernetzung der Präpolymere auf Basis von Polyvinylalkoholen, Polyvinylaminen, Polyacrylsäuren und Polyvinylpyrrolidon und deren Pfropfung auf die Membranoberfläche werden durch Energiezufuhr eingeleitet, und zwar Wärmezufuhr bei thermischen Initiatoren oder UV-Bestrahlung bei Fotoinitiatoren. Nachteilig bei diesem Verfahren ist die Verwendung von Initiatoren auf Peroxid- und Persulfatbasis, die in beträchtlichen Mengenanteilen zwischen 10 und 30 Gewichtsprozent während der Herstellung verwendet werden, da diese bzw. ihre Abbauprodukte (Alkalisulfate, -phosphate und Benzoesäurederivate) nach der Modifizierung vom modifizierten Membranmaterial durch Extraktion als Abfallstoffe entfernt werden müssen. Weiterhin ist das Herstellungsverfahren auf Wärmeenergie und UV-Strahlung als Strahlungsarten eingeschränkt, weil durch Elektronenstrahlen das Basismembranmaterial zerstört wird und somit keine Modifizierung erreicht wird (vgl. Spalte 3, Zeilen 53 bis 56, von US-Patent 5,629,084). Dieser Befund aus dem Stand der Technik wird durch die Tatsache gestützt, dass in allen Ausführungsbeispielen die Modifizierung der Ausgangsmembran unter Vernetzung des Präpolymers nur unter Wärmezufuhr bzw. unter UV-Bestrahlung durchgeführt wird, welche die Verwendung eines Radikal- bzw. Fotoinitiators notwendig macht (vgl. "Examples 1-11", von US-Patent 5,629,084).

Eine Alternative zum Einsatz von Initiatoren stellt die Initiierung der Polymerisation mittels Elektronenstrahlen dar. Hierbei wird die zu modifizierende Membran mit einer Lösung imprägniert, die reaktionsfähige organische Moleküle, wie z. B. von Acrylsäurederivaten abgeleitete Monomere, enthält, und anschließend Elektronenstrahlung ausgesetzt, welche die Reaktion der Monomere initiiert. Zur Modifizierung von Membranen wird dieses Verfahren beschrieben in US-Patent 4,944,879, EP-B-1 390 087, EP-B-1 381 447 und US-Patent 7,067,058. Häufig enthalten die beschriebenen lmprägnierlösungen darüber hinaus noch Vernetzer, d. h. zweifach oder allgemein mehrfach funktionelle Monomere (vgl. US-Patent 4,944,879, EP-B-1 390 087, EP-B-1 381 447, WO-A-2005/077500) oder Mischungen aus mehreren Monomeren und Vernetzern (EP-B-1 390 087, EP-B-1 381 447 und US-Patent 7,067,058). Allerdings kommen auch bei diesen Verfahren giftige Monomere wie Acrylate, Acrylamide und andere vinylische Monomere zum Einsatz. Ferner handelt es sich bei den Vernetzern ebenfalls um giftige und/oder ätzende Verbindungen. Das Problem der extrahierbaren, toxischen Bestandteile der modifizierten Membran, die nach der Membranherstellung in aufwändigen Reinigungsschritten entfernt werden müssen, wird auf diese Weise nicht gelöst. Auch die Varianten der thermisch induzierten Modifizierung mit einem Homopolymer und einem Vernetzer (WO-A-2005/077500) bzw. mit einem Oligomer, mit einem Monomer und optional mit einem Vernetzer setzen bedenkliche niedermolekulare, organische Verbindungen ein, wobei US-Patent 6,039,872 hydrophile Membranen offenbart, die aus einer hydrophoben Poly(ether)sulfonmembran und einem vernetzbaren Polyalkylenglykoldiacrylat sowie einem hydrophilen Monoacrylat herstellbar sind. Darüber hinaus sind die beschriebenen Verfahren wegen der hohen Anzahl unterschiedlicher Edukte komplex und kostenintensiv.

In einer weiteren Variante dieses Modifizierungsverfahrens der elektronenstrahlinduzierten Polymerisation werden polymere Zwischenschichten beschrieben, die auf die Membranoberfläche gepfropft werden, wobei auf die polymere Zwischenschicht eine weitere Modifizierungsschicht aufgepfropft ist, die der fertigen Membran hydrophile Eigenschaften verleiht. US-Patent 6,509,098 und US-Patent 6,616,982 offenbaren Membranen und deren Herstellungsverfahren, wobei die Modifizierung hydrophober Basismembranen mit einer intermediären Polymerschicht erfolgt, die aus (Meth)acrylsäure-Monomeren durch Elektronenbestrahlung generierbar ist. Auf diese intermediäre Polymerschicht wird nachfolgend durch elektronenstrahlinduzierte Pfropfung von Polyethylenoxid eine hydrophile, zweite Polymerschicht aufgebracht. Die intermediäre Polymerschicht wird aus toxikologisch bedenklichen, monomeren Acrylsäurederivaten hergestellt, und der Aufwand dieser zweistufigen Verfahren ist ebenfalls verhältnismäßig hoch.

R. Tischer, Dissertation 2008, Technische Universität Dresden, beschreibt eine Modifizierung von Membranoberflächen zur Verbesserung der Blutkompatibilität.

WO 2005/002712 A1 beschreibt ein Membrannachbehandlungsverfahren.

Der vorliegenden Erfindung liegt daher die Aufgabe zugrunde, eine mikroporöse Membran bereitzustellen, die auf ihrer Oberfläche eine dauerhafte Modifizierung aufweist, und keine extrahierbaren, toxischen Komponenten enthält, sowie ein umweltfreundliches Verfahren zu ihrer Herstellung bereitzustellen, welches auf den Einsatz toxikologisch bedenklicher Edukte und toxischer verfahrensinitiierender Stoffe verzichtet.

Diese Aufgaben werden durch die in den Ansprüchen gekennzeichneten Ausführungsformen der vorliegenden Erfindung gelöst.

Insbesondere wird ein Verfahren zur Herstellung einer mikroporösen Membran bereitgestellt, auf deren Oberfläche ein durch Elektronenstrahlung vernetztes Polymer fixiert ist, wobei das Verfahren die Schritte umfasst:
a) das Bereitstellen einer mikroporösen Ausgangsmembran,
b) das Imprägnieren der Membran mit einer Imprägnierlösung, umfassend ein Lösungsmittel sowie ein darin gelöstes oder dispergiertes Polymer, um eine imprägnierte Membran bereitzustellen, und
c) das Bestrahlen der imprägnierten Membran mit Elektronenstrahlung, um eine mikroporöse Membran, auf deren Oberfläche das durch Elektronenstrahlung vernetzte Polymer fixiert ist, bereitzustellen,
wobei in Schritt b) ein Polymer verwendet wird, welches ein organischer Stoff ist, der eine mittlere Molmasse von mindestens 500 g/mol hat, und welches aus der Gruppe, bestehend aus perfluorierten Kohlenwasserstoffen sowie Gemischen davon, ausgewählt ist, und
wobei die Elektronenbestrahlung mit einer Dosis von 1 bis 300 kGy erfolgt.

Im Rahmen der vorliegenden Erfindung wird unter der mikroporösen Membran eine Membran verstanden, die Poren im Mikrometerbereich aufweist. Vorzugsweise besitzt die mikroporöse Ausgangsmembran eine mittlere Porengröße im Bereich von 0,001 bis 10 µm.

Die mikroporöse Ausgangsmembran kann aus jedwedem geeigneten Material bestehen. Entsprechende mikroporöse Membranen sind im Stand der Technik bekannt. Vorzugsweise besteht die mikroporöse Ausgangsmembran aus einem Material, ausgewählt aus der Gruppe, bestehend aus Polysulfon, Polyethersulfon, Celluloseacetat, Cellulosenitrat, Polyvinylidenfluorid, Polypropen, Polyethen, Polytetrafluorethen, Polyamid, Copolymeren von diesen, sowie Gemischen davon.

In einer bevorzugten Ausführungsform des erfindungsgemäßen Verfahrens liegt die Dicke der Ausgangsmembran im Bereich von 5 bis 500 µm, mehr bevorzugt im Bereich von 50 bis 300 µm und am meisten bevorzugt im Bereich von 80 bis 200 µm.

Nach dem Bereitstellen der vorstehend beschriebenen mikroporösen Ausgangsmembran (Schritt a) des erfindungsgemäßen Verfahrens erfolgt in Schritt b) des erfindungsgemäßen Verfahrens das Imprägnieren der Membran mit einer Imprägnierlösung, umfassend ein Lösungsmittel sowie ein vorstehend beschriebenes darin gelöstes oder dispergiertes Polymer, um eine imprägnierte Membran bereitzustellen.

Im Rahmen der vorliegenden Erfindung werden dabei unter dem Imprägnieren alle möglichen Formen des Inkontaktbringens der im Wesentlichen gesamten Oberfläche der Ausgangsmembran mit dem Polymer verstanden. Vorzugsweise erfolgt das Imprägnieren durch Eintauchen der Ausgangsmembran in die Imprägnierlösung oder durch Besprühen der Ausgangsmembran mit der Imprägnierlösung, wobei sich optional ein Entfernen eines Überschusses der Imprägnierlösung von den äußeren Flächen der Membran anschließt. Wenn es für den Imprägnierprozess vorteilhaft ist, kann eine Benetzung einer trockenen Ausgangsmembran zuerst mit einer zur Benetzung geeigneten Flüssigkeit erfolgen, die in einem zweiten Schritt gegen die Imprägnierlösung ausgetauscht wird. Unter der Oberfläche der Ausgangsmembran wird sowohl die innere Oberfläche, d.h. die Poreninnenwandflächen, sowie die äußere Oberfläche, d.h. die äußeren Flächen der Membran, verstanden.

Das Lösungsmittel der Imprägnierlösung kann jedwedes geeignete Lösungsmittel sein. Es ist jedoch bevorzugt, dass ein solches Lösungsmittel ausgewählt wird, in welchem das Polymer zwar iösbar oder dispergierbar ist, welches jedoch nicht die Ausgangsmembran angreift bzw. auflöst. Zudem wird das Lösungsmittel vorzugsweise derart ausgewählt, dass es die Vernetzungsreaktion nicht stört. Das Quellverhalten der Ausgangsmembran in dem Lösungsmittel sollte bei der Wahl des Lösungsmittels beachtet werden. In einer bevorzugten Ausführungsform der vorliegenden Erfindung wird ein Lösungsmittel, ausgewählt aus der Gruppe, bestehend aus Wasser, Alkoholen, Ketonen, Hydrofluorethern sowie Gemischen davon, verwendet. Geeignete Alkohole sind beispielsweise Methanol, Ethanol, Propanol, *iso*-Propanol und Butanol. Ein geeignetes Keton ist beispielsweise Aceton. Besonders bevorzugt wird Wasser oder ein Gemisch aus Wasser und Butanol als Lösungsmittel verwendet. Insbesondere durch die Verwendung von Wasser als Lösungsmittel kann die Umweltfreundlichkeit sowie die Wirtschaftlichkeit des erfindungsgemäßen Verfahrens gesteigert werden.

In dem Lösungsmittel ist das Polymer in einer geeigneten Menge gelöst oder dispergiert. Durch geeignete Einstellung der Konzentration des zur Modifizierung verwendeten Polymers und der Parameter der nachfolgenden Elektronenbestrahlung können mit dem erfindungsgemäßen Verfahren Membranen mit variabel einstellbaren Permeabilitäten hergestellt werden. Es ist insbesondere bevorzugt, dass sich die Permeabilität durch die Behandlung um nicht mehr als 90 % verringert, besonders bevorzugt um nicht mehr als 50% verringert und am meisten bevorzugt um nicht mehr als 10 % verringert. Im Rahmen der vorliegenden Erfindung wird unter Permeabilität der auf Differenzdruck und Membranfläche normierte Volumenstrom von Wasser bei 20°C durch die Membran verstanden; welcher in Liter/(Stunde • Quadratmeter • bar) angegeben ist.

Es ist daher bevorzugt, dass die Imprägnierlösung von 0,01 bis 20 Gew.-% des Polymers enthält. Besonders bevorzugt enthält die Imprägnierlösung von 0,2 bis 5 Gew.-% des Polymers.

Die Imprägnierung erfolgt üblicherweise für eine Dauer, die ausreichend ist, um die im Wesentlichen vollständige Oberfläche der Ausgangsmembran zu bedecken. Vorzugsweise erfolgt das Imprägnieren für eine Dauer von 0,05 bis 10 Minuten, besonders bevorzugt von 0,1 bis 1 Minute. Bei einer konvektiven Imprägnierung beträgt die Imprägnierzeit bevorzugt unter einer Minute und bei einer diffusiven Imprägnierung liegt die Imprägnierzeit bevorzugt im Bereich von zwei bis 10 Minuten.

Unter konvektiver Imprägnierung soll nachfolgend eine Imprägnierung verstanden werden, bei welcher eine Durchströmung der Ausgangsmembran von der Imprägnierlösung erzwungen wird, wodurch ein konvektiver Transport des Polymers in die Poren der Ausgangsmembran hinein erreicht wird. Der geschwindigkeitsbestimmende Schritt wird dann praktisch nur durch die Assoziationskonstante zwischen der Ausgangsmembran und dem Polymer in der Imprägnierlösung bestimmt. Unter diffusiver Imprägnierung soll nachfolgend eine Imprägnierung verstanden werden, bei welcher eine Diffusionslimitierung des Massentransfers des in der Imprägnierlösung vorliegenden Polymers in die Poren der Ausgangsmembran hinein auftritt. Die Diffusionslimitierung besteht darin, dass die Geschwindigkeit des Adsorptionsprozesses durch der Diffusionsgeschwindigkeit des Polymers in die Poren hinein bestimmt wird. Die Diffusionsgeschwindigkeit wird ihrerseits durch den Diffusionskoeffizienten des Polymers, welcher sehr stark von dessen Größe, bzw. dessen Molekulargewicht abhängt, bestimmt.

Im Allgemeinen kann das zum Imprägnieren verwendete Polymer nach den jeweils gewünschten Oberflächeneigenschaften der zu erhaltenden mikroporösen Membran ausgesucht werden. Wird eine hydrophilisierte Membranoberfläche gewünscht, so sollte ein hydrophiles Polymer zur Modifizierung verwendet werden. Wird dagegen eine hydrophobisierte Membranoberfläche gewünscht, so sollte ein hydrophobes Polymer zur Modifizierung verwendet werden. Von der Hydrophilie beziehungsweise der Hydrophobie des Polymers hängt auch die Wahl des Lösungsmittels ab. Zur Herstellung einer anionisch bzw. kationisch geladenen Membran können zur Modifizierung Polymere verwendet werden, die entweder bereits Ladungen tragen oder die funktionelle Gruppen aufweisen, welche chemisch oder physikalisch in kationische oder anionische Gruppen überführbar sind. Diese Polymere können beispielsweise Aminfunktionen unterschiedlichen Substitutionsgrades, Carboxyl- oder Sufonsäuregruppen bzw. Ester- oder Amidfunktionen enthalten.

Im Rahmen der vorliegenden Erfindung wird unter einem Polymer ein organischer Stoff verstanden, der eine mittlere Molmasse von mindestens 500 g/mol hat und aus mindestens einer Sorte eines organischen Ausgangsmonomers herstellbar ist. Im Allgemeinen kann zur Imprägnierung ein Polymer verwendet werden, welches aus der Gruppe, bestehend aus einem Copolymer, einem Homopolymer, sowie Gemischen davon, ausgewählt ist. Allgemein kann ein Polymer verwendet werden, welches aus der Gruppe, bestehend aus Poly(2-ethyloxazolin), Polyethylenoxid (PEO), Polypropylenoxid (PPO), Hydroxyethylcellulose, Dextran, Hydroxymethylcellulose, PEO-PPO-PEO-Triblockcopolymeren, sowie Gemischen davon, ausgewählt ist. Ein PEO-PPO-PEO-Triblockcopolymere ist Pluronics^{®} der BASF AG, CAS-Nr. 9003-11-6, mit der allgemeinen Zusammensetzung (PEO)_{b}-(PPO)ₐ-(PEO)_{b}, wobei die Indices a und b im Bereich von 3-80 liegen. Erfindungsgemäß wird zur Modifizierung der Ausgangsmembran ein Polymer verwendet, welches aus der Gruppe der perfluorierten Kohlenwasserstoffe sowie Gemischen davon ausgewählt ist. Im Allgemeinen kann ein Polymer verwendet werden, welches aus der Gruppe der geladenen Polymere oder chelatbildenden Polymere stammt.

In Schritt c) des erfindungsgemäßen Verfahrens erfolgt anschließend das Bestrahlen der imprägnierten Membran mit Elektronenstrahlung, um eine mikroporöse Membran, auf deren Oberfläche das durch Elektronenstrahlung vernetzte Polymer fixiert ist, bereitzustellen. Durch die Bestrahlung gemäß dem erfindungsgemäßen Verfahren wird ein vernetztes Reaktionsprodukt erzeugt, welches ein aus der Ausgangsmembran und dem Polymer gebildetes dreidimensionales Netzwerk darstellt, und welches sich auf der im Wesentlichen gesamten inneren und äußeren Oberfläche der erhaltenen Membran bildet. Dieses Reaktionsprodukt ist auf der gemäß dem erfindungsgemäßen Verfahren erhältlichen Membran dauerhaft fixiert. Im Rahmen der vorliegenden Erfindung wird unter der Fixierung jegliche kovalente und nicht-kovalente Anbindung des vernetzten Polymers auf der gesamten Membranoberfläche verstanden, wie beispielsweise die Pfropfung, oder das Aufbringen einer Polymerschicht, welche die gesamte Membranoberfläche als zusammenhängendes Netzwerk auskleidet, ohne dass die Polymerschicht ihrerseits auf die Membranoberfläche aufgepfropft sein muß.

Die Bestrahlung erfolgt üblicherweise mit einer Energiedosis, welche ausreichend ist, das Polymer auf der Oberfläche der Membran zu fixieren. Die kinetische Energie der Elektronen, die zur Modifizierung verwendet werden, kann über die Beschleunigungsspannung der Elektronenstrahlquelle so eingestellt werden, dass die Energiedosis der Bestrahlung homogen über die durchdrungene Membran verteilt ist oder dass ein Gradient im Querschnitt der Membran erzeugt wird. Durch die gleichzeitige oder sequenzielle Bestrahlung von beiden Seiten sind weitere komplexere Tiefendosisprofile in der Membran erzeugbar, die für einzelne Ausführungen unabhängig von anderen Parametern des Prozesses einstellbar sind. Gemäß der vorliegenden Erfindung erfolgt die Elektronenbestrahlung mit einer Dosis von 1 bis 300 kGy, bevorzugt mit einer Energiedosis von 5 bis 200 kGy. Besonders bevorzugt erfolgt die Elektronenbestrahlung mit einer Dosis von 25 bis 150 kGy. Es hat sich gezeigt, dass bei Anpassung der Parameter der Elektronenstrahlung an die individuellen Stoffeigenschaften der Ausgangsmembran eine permanente Modifizierung möglich ist, ohne dass es zu einer vorherigen Zersetzung der Ausgangsmembran kommt. Es wurde also überraschenderweise gefunden, dass es entgegen den Befunden aus dem US-Patent 5,629,084 möglich ist, eine dauerhafte Modifizierung einer mikroporösen Ausgangsmembran durch ein durch Elektronenstrahlung erzeugbares Reaktionsprodukt eines Polymers zu erreichen, ohne dass eine vorherige Zersetzung der Ausgangsmembran durch die Elektronenstrahlung auftritt.

Neben der Beschleunigungsspannung zur Beeinflussung der Eindringtiefe der Elektronenstrahlung ist eine Veränderung der Umgebungsatmosphäre bei der Bestrahlung möglich. So kann der Reaktionsablauf während der Bestrahlung von der Anwesenheit reaktiver Stoffe, wie Sauerstoff, beeinflusst werden. Durch Begasen mit Stickstoff oder Edelgasen sowie reaktiven Gasen, wie Sauerstoff, kann die Zusammensetzung der Umgebungsatmosphäre während der Bestrahlung eingestellt werden. Eine weitere Möglichkeit zur Einstellung der atmosphärischen Bedingungen während der Bestrahlung stellt das Bedecken der Membran mit geeigneten Folien dar, die die Diffusion von Gasen in der Prozesszone in die imprägnierte Membran stark einschränken.

Die Bestrahlung kann mit einer einzelnen Lage oder mit einer mehrlagigen Packung von Membranen erfolgen, wobei die Eindringtiefe der Elektronen über die verwendete Beschleunigungsspannung angepasst werden kann.

Gegebenenfalls kann das erfindungsgemäße Verfahren vor dem Schritt b) des Imprägnierens weiter den Schritt d) des Vorbehandelns der mikroporösen Ausgangsmembran mit einem Vorbenetzungsmedium umfassen. Diese Vorbenetzung kann in Abhängigkeit von der verwendeten Ausgangsmembran den nachfolgenden Imprägnierungsschritt erleichtern. Vorzugsweise ist das Vorbenetzungsmittel aus der Gruppe, bestehend aus Alkoholen, Ketonen, Hydrofluorethern, Kohlenwasserstoffen sowie Kombinationen davon, ausgewählt. Geeignete Alkohole sind beispielsweise Methanol, Ethanol, Propanol, iso-Propanol und Butanol. Ein geeignetes Keton ist beispielsweise Aceton.

In einer weiteren bevorzugten Ausführungsform der vorliegenden Erfindung umfasst das Verfahren nach dem Schritt c) des Bestrahlens weiter die Schritte e) des Extrahierens der mikroporösen Membran, auf deren Oberfläche ein durch Elektronenstrahlung vernetztes Polymer fixiert ist, mit einem Extraktionsmittel, um eine extrahierte Membran bereitzustellen, und f) des Trocknens der extrahierten Membran. In Schritt e) löst das Extraktionsmittel das Material der fertigen Membran nicht, während das nicht umgesetzte Polymer, vernetztes, nicht auf der Membran fixiertes Polymer und Lösungsmittelreste aus Schritt b) hingegen vom Extraktionsmittel gelöst werden. Das Quellverhalten der nach Schritt c) vorliegenden Membran im Extraktionsmittel sollte bei der Wahl des Extraktionsmittels beachtet werden. Vorzugsweise ist das Extraktionsmittel aus der Gruppe, bestehend aus Wasser, wässrigen Säuren, wässrigen Laugen, Alkoholen, Ketonen sowie Kombinationen davon, ausgewählt. Geeignete Alkohole sind beispielsweise Methanol, Ethanol, Propanol, iso-Propanol und Butanol. Ein geeignetes Keton ist beispielsweise Aceton. Das Trocknen der extrahierten Membran erfolgt vorzugsweise für eine Dauer von 6 Sekunden bis 120 Minuten bei einer Temperatur im Bereich von 60 bis 190°C. Auf diese Weise ist es möglich, in vergleichsweise kurzer Zeit das Lösungsmittel aus der Membran zu entfernen und so eine einsatzfähige modifizierte Membran zu erhalten.

Mit dem erfindungsgemäßen Verfahren wird die im Wesentlichen gesamte Oberfläche der porösen Ausgangsmembran (also einschließlich der Poreninnenwandflächen) mit dem zur Modifizierung verwendeten Polymer beschichtet. Vorzugsweise wird dabei die innere und äußere Oberfläche der Membran so modifiziert, dass die Permeabilität nicht stärker als 90 %, bevorzugt nicht stärker als 50 % und am meisten bevorzugt nicht stärker als 10 % verringert wird.

Das zur Modifizierung verwendete Polymer wird dabei nicht *in situ* gebildet, d.h. nicht in Form von Monomereinheiten auf die Oberfläche der Ausgangsmembran aufgebracht und durch die Elektronenbestrahlung polymerisiert. Vielmehr wird das Polymer in Lösung mit der Ausgangsmembran in Kontakt gebracht und dann Elektronenstrahlung ausgesetzt. So ist das Polymer das Edukt für das auf der Ausgangsmembran durch Elektronenstrahlung permanent fixierte und vernetzte Reaktionsprodukt, das allein oder in Synergie mit der Ausgangsmembran die hydrophilen bzw. hydrophoben Eigenschaften der nach dem erfindungsgemäßen Verfahren hergestellten Membran bestimmt.

Das erfindungsgemäße Verfahren hat weiterhin den Vorteil, dass lediglich die Imprägnierung sowie eine einstufige Bestrahlung nötig sind, um eine modifizierte Membran zu erhalten.

Die vorliegende Erfindung betrifft weiter eine mikroporöse Membran, auf deren Oberfläche ein durch Elektronenstrahlung vernetztes Polymer fixiert ist, und welche durch das vorstehend dargestellte erfindungsgemäße Verfahren hergestellt ist.

Ferner betrifft die vorliegende Erfindung die Verwendung dieser mikroporösen Membran als Membranfilter in der Hämodialyse, Virusfiltration und/oder in der Sterilfiltration von Gasen und Flüssigkeiten.

Die vorliegende Erfindung wird durch die nachstehenden, nicht-beschränkenden Beispiele weiter erläutert.

### Beispiele

### Methoden der Charakterisierung:

### Tropfenaufsaugzeit:

Auf die getrocknete, modifizierte Membran wurde ein Tropfen Wasser des Volumens 10 µl aufgesetzt und die Zeit gemessen, bis der Tropfen vollständig von der Membran aufgesaugt wurde.

### Soxhlet-Extraktion:

Die Soxhlet-Extraktion der modifizierten Membran erfolgte für 72 h bei einem Druck von 1 atm und einer Temperatur von 72°C mit Ethanol als Extraktionsmittel.

### Permeabilität

Die Permeabilität der Membran ist der auf Differenzdruck und Fläche normierte Volumenstrom durch die Membran. Die Permeabilität von Wasser bei 20°C durch die Membran wird in Liter/(Stunde • Quadratmeter • bar) angegeben.

### Proteinbindung:

10-mm-Rundstanzlinge der getrockneten, modifizierten Membran wurden in je 200 µl γ-Globulinlösung (Sigma-Aldrich, Konzentration 3 mg/ml in 0,05 M KPI-Puffer (0,05 M Kaliumphosphat in Reverse-Osmose-Wasser), pH 7) für 1 h inkubiert. Anschließend erfolgte das Absaugen der Lösung und dreimaliges 10-minütiges Extrahieren der Stanzlinge mit je 1 ml des Puffers. Dann wurden die Stanzlinge mit je 300 µl BCA-Reagenz-Gebrauchslösung aus BCA-Reagenz A (0,886 Gew-% 2,2'-Bichinolin-4,4'-dicarbonsäure (Bicinchoninsäure), 0,16 Gew-% Dinatriumtartrat, 2 Gew-% Natriumcarbonat [wasserfrei] 0,95 Gew-% Natriumhydrogencarbonat in Reverse-Osmose-Wasser) und BCA-Reagenz B (4 Gew.-% CuSO₄-Lösung in Reverse-Osmose-Wasser), im Verhältnis 50:1 unmittelbar vor Gebrauch gemischt, behandelt. Die Intensität der Verfärbung der über dem Stanzling stehenden Lösung wurde als Absorbanz bei 595 nm mit einem Fotometer ausgewertet. Die Konzentration des membrangebundenen γ-Globulins wurde als Interpolation einer Standardreihe gemäß D. Burns, A. Zydney, "Effect of Solution pH on Protein Transport through UF Membranes", Biotechnology and Bioengineering, Vol. 64, Nr. 1, 1999, S. 27-37, bestimmt.

### Oberflächenspannung:

Auf die getrocknete, modifizierte Membran wurde ein Tropfen einer wässrigen Natriumchlorid- oder Calciumchlorid-Lösung oder einer anderen geeigneten, (nicht-)wässrigen Flüssigkeit bekannter Oberflächenspannung des Volumens 10 µl aufgesetzt und die Zeit gemessen, bis der Tropfen die Membran in der gesamten Dicke benetzt hat, was durch eine deutliche Erhöhung der Transparenz gekennzeichnet ist. Benetzte der Tropfen in weniger als einer Sekunde, wurde die Benetzung als spontan bezeichnet. Die Oberflächenspannung der Natriumchlorid- bzw. Calciumchloridlösung bzw. der (nicht-)wässrigen Flüssigkeit wird in Schritten von 1 mN/m erhöht und das Auftropfexperiment wiederholt, bis die Benetzung nicht mehr spontan erfolgt. Die Oberflächenspannung der Membran entspricht der höchsten Oberflächenspannung der verwendeten Lösung, die gerade noch spontan benetzt.

### Allgemeine Beschreibung der Durchführung:

Die Ausgangsmembran mit einer Dicke im Bereich von 5 bis 500 µm wurde mit einer Lösung des zur Modifizierung verwendeten Polymers durch Imprägnierung für 0,05 bis 10 Minuten benetzt, wobei die Konzentration des Polymers in der Lösung im Bereich von 0,01 bis 20 Gewichtsprozent lag. Wenn das Membranmaterial durch diese Imprägnierlösung nicht spontan benetzt wurde, wurde gegebenenfalls eine Vorbenetzung mit einer geeigneten Lösung, die das Ausgangsmembranmaterial spontan benetzte, durchgeführt. Anschließend fand der Austausch dieses Vorbenetzungsmediums durch die Imprägnierlösung statt. Nach der Kontaktierung der Membran mit der Imprägnierlösung wurde die Membran zwischen zwei Polyethen-(PE-)Folien gelegt und überschüssige Imprägnierlösung mit einem Roller von der Membran verdrängt oder zwischen zwei gummierten Walzen abgequetscht. Anschließend wurde die imprägnierte Membran Elektronenstrahlung (ESI Electrocurtain) ausgesetzt, wobei Beschleunigungsspannungen zwischen 150 bis 240 kV und Dosen von 1 bis 300 kGy zum Einsatz kamen. Die Transportgeschwindigkeit, mit der das zu bestrahlende Material durch die Bestrahlungszone befördert wurde, lag im Bereich von 1 bis 100 m/min. Die Bestrahlungszone wurde mit Stickstoff inertisiert. Nach der Bestrahlung wurde die Membran mit geeigneten Lösungsmitteln extrahiert, um nicht umgesetzte Moleküle des zur Modifizierung verwendeten Polymers zu lösen. Anschließend wurde die modifizierte Membran im Trockenschrank getrocknet und auf ihre Eigenschaften hin untersucht.

Mit dem erfindungsgemäßen Herstellungsverfahren wurden Membranen aus Polyethersulfon (Sartorius Stedim Biotech GmbH, Typ 15407, mittlere Porengröße 0,2 µm, Typ 15428, mittlere Porengröße 0,02 µm, Typ 15404, mittlere Porengröße 0,8 µm) bzw. aus Polysulfon (Sartorius Stedim Biotech GmbH, Typ 14907, mittlere Porengröße 0,2 µm) mit unterschiedlichen, durch Elektronenstrahlung aus einem Polymer erzeugbaren Reaktionsprodukten hydrophilisiert.

Die Eigenschaften der modifizierten Membranen wurden nach unterschiedlichen Imprägnierungen ("Imprägn.") und nach Einwirkung unterschiedlicher Bestrahlungsdosen (Dosis in kGy) untersucht. Die Eigenschaften der Membranen wurden durch die Tropfenaufsaugzeit (TASZ in s), die Tropfenaufsaugzeit nach Soxhlet-Extraktion (TASZsox in s), die Permeabilität von Wasser bei 20 °C (Fluss in I (Liter) pro m² Membranfläche in 1 Stunde (h) bei 1 bar Differenzdruck) sowie durch die unspezifische Proteinbindung von γ-Globulin ("Prot.Bind." in µg Protein pro cm² Membranfläche) quantifiziert. Die unspezifische Proteinbindung und die Oberflächenspannung wurden, wie unter "Methoden der Charakterisierung" beschrieben, bestimmt.

Die dauerhafte Fixierung bei den durch das erfindungsgemäße Verfahren erhaltenen Membranen wurde über eine Soxhlet-Extraktion nachgewiesen. Darüber hinaus wurde gezeigt, dass das auf der mikroporösen Membran fixierte Reaktionsprodukt vernetzt ist, indem die durch das erfindungsgemäße Verfahren erhaltene Membran mit Dichlormethan behandelt wurde. Bei dem dabei als Gelphase erhaltenen unlöslichen Rückstand wurden mittels NMR- und IR-Spektroskopie funktionelle Einheiten des zur Modifizierung verwendeten Polymers nachgewiesen. Im Gegensatz dazu waren die Ausgangsmembranen in Dichlormethan vollständig löslich.

### 1) Poly(2-ethyloxazolin) (Vergleichsbeispiel):

Zunächst wurde als Polymer Poly(2-ethyloxazolin) (Aquazol^{®} 5) verwendet, welches ein hydrophiles Homopolymer der Firma Polymer Chemistry Innovations mit einer Molmasse von 5000 g/mol und einer Polydispersität von 3 bis 4 ist. Die Imprägnierung erfolgte mit einer Lösung von Aquazol^{®} 5 in Reverse-Osmose-(RO-)Wasser, die 0,5 Gewichtsprozent des Homopolymers enthielt. Die Membran des Typs 15407 wurde nach der oben unter "Allgemeine Beschreibung der Durchführung" stehenden Vorschrift (Dosis 75 kGy (entspricht 75 kJ/kg)) modifiziert und wies nach Extraktion mit Isopropanol (IPA) und Wasser die in Tabelle 1 aufgeführten Eigenschaften auf. Die Referenzmembran wurde lediglich mit IPA und Wasser extrahiert, ohne vorher mit Imprägnierlösung und/oder Elektronenstrahlung behandelt worden zu sein; eine weitere Referenzmembran wurde nach Imprägnierung mit Wasser bestrahlt und anschließend mit IPA und Wasser extrahiert:

**Tabelle 1:**

| Imprägn. | Dosis /kGy | TASZ/s | Proteinbindung / (µg/cm²) | Permeabilität /(l/(h•m²•bar) | Oberflächenspannung /(mN/m) | TASZ Soxhlet/s |
|---|---|---|---|---|---|---|
| Aquazol 5,1% | 75 | 8±1 | 1,1 | 1,10•10⁴ | 76* | 7,5 |
| Wasser | 75 | 13±1 | 8,2 | 1,29•10⁴ | 72** | 29±3 |
| keine | 0 | 24±2 | 9±1 | 1,20•10⁴ | 72** | >300 |

| | | | | | | |
|---|---|---|---|---|---|---|
| Oberflächenspannung wurde bestimmt mit * wässriger CaCl₂-Lösung (12,3 Gew% CaCl₂) bzw. ** Wasser | | | | | | |

Es zeigte sich, dass die modifizierte Membran im Vergleich zu den Referenzmembranen eine deutlich verringerte TASZ aufweist, insbesondere auch nach 72-stündiger Soxhlet-Extraktion mit Ethanol. Folglich wird die Ausgangsmembran durch die elektronenstrahlinduzierte Modifizierung nach Imprägnierung mit einer wässrigen Lösung von Poly(2-ethyloxazolin) permanent hydrophilisiert, ohne dass eine vorherige Zersetzung der Ausgangsmembran auftritt. Ferner wird die unspezifische Proteinbindung der Membran durch diese Modifizierung drastisch reduziert. Dabei wird der Fluss durch die Modifizierung nur geringfügig verändert.

### 2) Polyethylenglykol 4000 (Vergleichsbeispiel)

Die Imprägnierung der Ausgangsmembran des Typs 15407 erfolgte mit einer Lösung von Pluriol^{®} 4000, erhältlich bei der Firma BASF (Polyethylenglykol mit einer mittleren Molmassse 4000 g/mol), in Reverse-Osmose-(RO-)Wasser, welche 1,0 Gewichtsprozent des Homopolymers enthielt. Die Membran wurde nach der oben unter "Allgemeine Beschreibung der Durchführung" stehenden Vorschrift (Dosis 75 kGy (entspricht 75 kJ/kg) modifiziert und wies nach Extraktion mit Isopropanol (IPA) und Wasser die in Tabelle 2 aufgeführten Eigenschaften auf. Die Referenzmembran wurde lediglich mit IPA und Wasser extrahiert, ohne vorher mit Imprägnierlösung und/oder Elektronenstrahlung behandelt worden zu sein; eine weitere Referenzmembran wurde nach Imprägnierung mit Wasser bestrahlt und anschließend mit IPA und Wasser extrahiert:

**Tabelle 2:**

| Imprägn. | Dosis /kGy | TASZ/s | Protein bindung / (µg/cm²) | Permeabilität /(l/(h•m²•bar) | Oberflächenspannung /(mN/m) | TASZ Soxhlet/s |
|---|---|---|---|---|---|---|
| Wasser | 75 | 13±1 | 8,2 | 1,29•10⁴ | 72* | 29±3 |
| keine | 0 | 24±2 | 9±1 | 1,20.10⁴ | 72* | >300 |
| Pluriol^{®} 4000, 1% | 75 | 10,5 | 3,3 | 0,78•10⁴ | 95** | 7 |

| | | | | | | |
|---|---|---|---|---|---|---|
| Oberflächenspannung wurde bestimmt mit ** wässriger CaCl₂-Lösung (42,7 Gew% CaCl₂) bzw. * Wasser | | | | | | |

Es zeigte sich, dass die modifizierte Membran im Vergleich zu den Referenzmembranen eine deutlich erhöhte Oberflächenspannung aufweist, insbesondere auch nach 72-stündiger Soxhlet-Extraktion mit Ethanol. Folglich wird die Ausgangsmembran durch die elektronenstrahlinduzierte Modifizierung nach Imprägnierung mit einer wässrigen Lösung von Pluriol^{®} 4000 permanent hydrophilisiert, ohne dass eine vorherige Zersetzung der Ausgangsmembran auftritt. Ferner wird die unspezifische Proteinbindung der Membran durch diese Modifizierung drastisch reduziert und die Oberflächenspannung gleichzeitig drastisch erhöht. Dabei wird der Fluss durch die Modifizierung um 35 % bzw. 39 % gegenüber der Ausgangs- bzw- Referenzmembran verringert.

### 3) Hydroxyethylcellulose 4000 (Vergleichsbeispiel)

Die Imprägnierung der Ausgangsmembran des Typs 15407 erfolgte mit einer Lösung von Hydroxyethylcellulose, Viskosität 4000 µPa•s, als 1-gewichtsprozentige Lösung in Wasser bei 20°C, in Reverse-Osmose-(RO-)Wasser, die 0,5 Gewichtsprozent des Homopolymers enthielt. Die Membran wurde nach der oben unter "Allgemeine Beschreibung der Durchführung" stehenden Vorschrift (Dosis 75 kGy (entspricht 75 kJ/kg) modifiziert und wies nach Extraktion mit Isopropanol (IPA) und Wasser die in Tabelle 3 aufgeführten Eigenschaften auf. Die Referenzmembran wurde lediglich mit IPA und Wasser extrahiert, ohne vorher mit Imprägnierlösung und/oder Elektronenstrahlung behandelt worden zu sein; eine weitere Referenzmembran wurde nach Imprägnierung mit Wasser bestrahlt und anschließend mit IPA und Wasser extrahiert.

**Tabelle 3:**

| Imprägn. | Dosis /kGy | TASZ/s | Proteinbindung /(µg/cm²) | Permeabilität /(l/(h•m²•bar) | Oberflächenspannung /(mN/m) | TASZ Soxhlet/s |
|---|---|---|---|---|---|---|
| Wasser | 75 | 13±1 | 8,2 | 1,29•10⁴ | 72* | 29±3 |
| keine | 0 | 24±2 | 9±1 | 1,20•10⁴ | 72* | >300 |
| HydroxyethylCellulose, 0,5% | 200 | 7,0 | 10 | 1,08.10⁴ | 76** | 7 |

| | | | | | | |
|---|---|---|---|---|---|---|
| Oberflächenspannung wurde bestimmt mit ** wässriger CaCl₂-Lösung (12,3 Gew% CaCl₂) bzw. * Wasser | | | | | | |

Es zeigte sich, dass die modifizierte Membran im Vergleich zu den Referenzmembranen eine deutlich verringerte TASZ aufweist, insbesondere auch nach 72-stündiger Soxhlet-Extraktion mit Ethanol. Folglich wird die Ausgangsmembran durch die elektronenstrahlinduzierte Modifizierung nach Imprägnierung mit einer wässrigen Lösung von Hydroxyethylcellulose 4000 permanent hydrophilisiert, ohne dass eine vorherige Zersetzung der Ausgangsmembran auftritt. Ferner wird die Oberflächenspannung der Membran leicht erhöht. Dabei wird der Fluss durch die Modifizierung nur geringfügig verändert. Die Proteinbindung der modifizierten Membranen ist mit der Proteinbindung der Referenzmembranen vergleichbar.

### 4) Dextran 4 MW 4000-6000 g/mol (Vergleichsbeispiel)

Die Imprägnierung der Ausgangsmembran des Typs 15407 erfolgte mit einer Lösung von Dextran 4, Molgewicht 4000-6000 g/mol, der Serva Feinbiochemika GmbH & Co. KG in Reverse-Osmose-(RO-)Wasser, die 2,0 Gewichtsprozent des Homopolymers enthielt. Die Membran wurde nach der oben unter "Allgemeine Beschreibung der Durchführung" stehenden Vorschrift (Dosis 340 kGy (entspricht 340 kJ/kg) modifiziert und wies nach Extraktion mit Isopropanol (IPA) und Wasser die in Tabelle 4 aufgeführten Eigenschaften auf. Die Referenzmembran wurde lediglich mit IPA und Wasser extrahiert, ohne vorher mit Imprägnierlösung und/oder Elektronenstrahlung behandelt worden zu sein; eine weitere Referenzmembran wurde nach Imprägnierung mit Wasser bestrahlt und anschließend mit IPA und Wasser extrahiert.

**Tabelle 4:**

| Imprägn. | Dosis /kGy | TASZ/s | Proteinbindung / (µg/cm²) | Permeabilität /(l/(h•m²•bar) | Oberflächenspannung /(mN/m) | TASZ Soxhlet/s |
|---|---|---|---|---|---|---|
| Wasser | 75 | 13±1 | 8,2 | 1,29•10⁴ | 72* | 29±3 |
| keine | 0 | 24±2 | 9±1 | 1,20•10⁴ | 72* | >300 |
| 2 Gew.% Dextran 4 | 340 | 10 | 16±3 | 0,87•10⁴ | 78** | 9 |

| | | | | | | |
|---|---|---|---|---|---|---|
| Oberflächenspannung wurde bestimmt mit ** wässriger CaCl₂-Lösung (16,3 Gew% CaCl₂) bzw. * Wasser | | | | | | |

Es zeigte sich, dass die modifizierte Membran im Vergleich zur Referenzmembran, die nicht imprägniert worden ist, eine verringerte TASZ aufweist, insbesondere auch nach 72-stündiger Soxhlet-Extraktion mit Ethanol. Folglich wird die Ausgangsmembran durch die elektronenstrahlinduzierte Modifizierung nach Imprägnierung mit einer wässrigen Lösung von Dextran permanent hydrophilisiert, ohne dass eine vorherige Zersetzung der Ausgangsmembran auftritt. Ferner wird die Oberflächenspannung der Membran leicht erhöht. Dabei wird der Fluss durch die Modifizierung um 28 % bzw. 33 % verringert.

### 5) Pluronics^{®} PE3500 (Vergleichsbeispiel)

Die Imprägnierung der Ausgangsmembran des Typs 15407 erfolgte mit einer Lösung von Pluronics^{®} - PE3500 der Firma BASF AG in Reverse-Osmose-(RO-)Wasser, die 0,5 Gewichtsprozent des Copolymers enthielt. Die Membran wurde nach der oben unter "Allgemeine Beschreibung der Durchführung" stehenden Vorschrift (Dosis 75 kGy (entspricht 75 kJ/kg) modifiziert und wies nach Extraktion mit Isopropanol (IPA) und Wasser die in Tabelle 5 aufgeführten Eigenschaften auf. Die Referenzmembran wurde lediglich mit IPA und Wasser extrahiert, ohne vorher mit Imprägnierlösung und/oder Elektronenstrahlung behandelt worden zu sein; eine weitere Referenzmembran wurde nach Imprägnierung mit Wasser bestrahlt und anschließend mit IPA und Wasser extrahiert.

**Tabelle 5:**

| Imprägn. | Dosis/ kGy | TASZ/s | Proteinbindung /(µg/cm²) | Durch-Fluss /(s/100 ml) | Oberflächenspannung /(mN/m) | TASZ Soxhlet/s |
|---|---|---|---|---|---|---|
| Wasser | 75 | 13±1 | 8,2 | 1,29•10⁴ | 72* | 29±3 |
| keine | 0 | 24±2 | 9±1 | 1,20•10⁴ | 72* | >300 |
| 0,5 Gew.% | 75 | 6,9 | 3,4 | 1,15•10⁴ | 74** | 18 |

| | | | | | | |
|---|---|---|---|---|---|---|
| Oberflächenspannung wurde bestimmt mit ** wässriger CaCl₂-Lösung (7,5 Gew% CaCl₂) bzw. * Wasser | | | | | | |

Es zeigte sich, dass die modifizierte Membran im Vergleich zu den Referenzmembranen eine deutlich verringerte TASZ aufweist, insbesondere auch nach 72-stündiger Soxhlet-Extraktion mit Ethanol. Folglich wird die Ausgangsmembran durch die elektronenstrahlinduzierte Modifizierung nach Imprägnierung mit einer wässrigen Lösung von Pluronics^{®} PE 3500 permanent hydrophilisiert, ohne dass eine vorherige Zersetzung der Ausgangsmembran auftritt. Ferner wird die unspezifische Proteinbindung der Membran durch diese Modifizierung deutlich reduziert. Dabei wird der Fluss durch die Modifizierung nur geringfügig verändert.

### 6) Novec^{®} (erfindungsgemäßes Beispiel)

Die Imprägnierung der Ausgangsmembran aus Polyethersulfon des Typs 15407 erfolgte mit einer Zubereitung vertrieben unter dem Handelsnamen Novec^{®} EGC-1700 "Electronic fluid" der Firma 3M AG, einer Lösung eines perfluorierten aliphatischen Polymers in Methylnonafluor(iso)butylethern, die einen Feststoffanteil von 2 % enthält. Die Membran wurde mit der Zubereitung Novec^{®} EGC-1700 "Electronic fluid" imprägniert und mit einer Strahlendosis von 150 kGy modifiziert und wies nach der Extraktion mit IPA und Wasser die in Tabelle 6 aufgeführten Eigenschaften auf. Die Referenzmembran wurde mit Novec^{®}EGC-1700 "Electronic fluid" imprägniert, aber nicht bestrahlt und analog zur modifizierten Membran extrahiert.

**Tabelle 6:**

| Imprägn. | Dosis /kGy | TASZ/s | Proteinbindung /(µg/cm²) | Durchfluss/ (s/100 ml) | Oberflächen spannung /(mN/m) | TASZ Soxhlet /s |
|---|---|---|---|---|---|---|
| Wasser | 150 | 13±1 | 15,2 | 1,29•10⁴ | 72* | 29±3 |
| Novec^{®} EGC-1700 | 0 | 13±1 | 8,2 | 1,31•10⁴ | 72* | >300 |
| Novec^{®} EGC-1700 | 150 | >300 | >80 | 1,05•10⁴ | 21** | >300 |

| | | | | | | |
|---|---|---|---|---|---|---|
| Oberflächenspannung wurde bestimmt mit ** Isopropanol bzw. * Wasser | | | | | | |

Die hydrophile Ausgangsmembran Typ 15407 wird durch die Kombination der Bestrahlung und der Imprägnierung mit Novec^{®} EGC-1700 hydrophob und weist eine deutlich verringerte Oberflächenspannung von 21 mN/m auf, was weder durch die Imprägnierung mit Novec^{®} EGC-1700 ohne Bestrahlung noch durch die Imprägnierung mit Wasser und anschließende Bestrahlung erreicht wird. Folglich wird die Ausgangsmembran durch die elektronenstrahlinduzierte Modifizierung nach Imprägnierung mit Novec^{®} EGC-1700 permanent hydrophobiert, ohne dass eine vorherige Zersetzung der Ausgangsmembran auftritt.

### 7) Hydroxyethylcellulose auf Polysulfon (Vergleichsbeispiel)

Die Imprägnierung der hydrophoben Ausgangsmembran des Typs 14907 erfolgte mit einer Lösung aus Hydroxyethylcellulose, Viskosität 4000 µPa·s in Reverse-Osmose-(RO-)Wasser, die 1,0 Gewichtsprozent des Homopolymers enthielt. Die Membran wurde nach der oben unter "Allgemeine Beschreibung der Durchführung" stehenden Vorschrift (Dosis 100 kGy (entspricht 100 kJ/kg)) modifiziert und wies nach Extraktion mit Isopropanol (IPA) und Wasser die in Tabelle 7 aufgeführten Eigenschaften auf. Die Referenzmembran wurde lediglich mit IPA und Wasser extrahiert, ohne vorher mit Imprägnierlösung und/oder Elektronenstrahlung behandelt worden zu sein; eine weitere Referenzmembran wurde nach Imprägnierung mit Wasser bestrahlt und anschließend mit IPA und Wasser extrahiert.

**Tabelle 7:**

| Imprägn. | Dosis /kGy | TASZ /s | Proteinbindung /(µg/cm²) | Permeabilität /(l/(h•m²•bar) | Oberflächenspannung /(mN/m) | TASZ Soxhlet /s |
|---|---|---|---|---|---|---|
| Wasser | 100 | >300 | 83 | 1,37•10⁴ | <70* | >300 |
| keine | 0 | >300 | 83 | 1,43•10⁴ | <70* | >300 |
| Hydroxyethylcellulose, 1 Gew-% | 100 | 7,0 | 24,2 | 1,02•10⁴ | 82** | 6,9 |

| | | | | | | |
|---|---|---|---|---|---|---|
| Oberflächenspannung wurde bestimmt mit * Ethylenglykol-Wasser-Gemisch im Gewichtsverhältnis 6:94 bzw. ** mit wässriger CaCl₂-Lösung (23,3 Gew% CaCl₂) | | | | | | |

Die hydrophobe Ausgangsmembran des Typs 14907 weist nach der Modifizierung hydrophile Eigenschaften auf, die Oberflächenspannung ist mit 82 mN/m deutlich erhöht und die Membran benetzt spontan mit Wasser. Die Membran wurde permanent hydrophilisiert, ohne dass durch die Bestrahlung eine Zersetzung der Membran eingetreten ist.

### 8) PVP-VA auf Polysulfon (Vergleichsbeispiel)

Die Imprägnierung der hydrophoben Ausgangsmembran des Typs 14907 erfolgte mit einer Lösung aus Polyvinylpyrrolidon-Vinylacetat (PVP-VA) erhältlich unter dem Handelsnamen Luvisköl^{®} VA 37 E von BASF SE, in Reverse-Osmose-(RO-)Wasser, die 2,0 Gewichtsprozent des Copolymers enthielt. Die Membran wurde nach der oben unter "Allgemeine Beschreibung der Durchführung" stehenden Vorschrift (Dosis 50 kGy (entspricht 50 kJ/kg)) modifiziert und wies nach Extraktion mit Isopropanol (IPA) und Wasser die in Tabelle 8 aufgeführten Eigenschaften auf. Die Referenzmembran wurde lediglich mit IPA und Wasser extrahiert, ohne vorher mit Imprägnierlösung und/oder Elektronenstrahlung behandelt worden zu sein; eine weitere Referenzmembran wurde nach Imprägnierung mit Wasser bestrahlt und anschließend mit IPA und Wasser extrahiert.

**Tabelle 8:**

| Imprägn. | Dosis /kGy | TASZ /s | Proteinbindung /(µg/cm²) | Permeabilität /(l/(h•m²•bar) | Oberflächenspannung /(mN/m) | TASZ Soxhlet /s |
|---|---|---|---|---|---|---|
| Wasser | 50 | >300 | 83 | 1,40•10⁴ | <70* | >300 |
| keine | 0 | >300 | 83 | 1,38•10⁴ | <70* | >300 |
| PVP-VA, 2% | 50 | 16,2 | 4,7 | 5,2•10³ | 80** | 36,3 |

| | | | | | | |
|---|---|---|---|---|---|---|
| Oberflächenspannung wurde bestimmt mit * Ethylenglykol-Wasser-Gemisch im Gewichtsverhältnis 6:94 bzw. ** mit wässriger CaCl₂-Lösung (20,0 Gew% CaCl₂) | | | | | | |

Die hydrophobe Ausgangsmembran benetzt nach der Imprägnierung und Bestrahlung spontan mit Wasser, die Oberflächenspannung ist mit 80 mN/m deutlich erhöht, ohne dass zuvor eine Zersetzung der Membran eintritt.

### 9) Polyethyloxazolin auf Polyethersulfonmembran vom Typ 15428 (Vergleichsbeispiel)

Die Ausgangsmembran vom Typ 15428 wurde mit einer Lösung aus Polyethyloxazolin in Reverse-Osmose Wasser imprägniert, die 5 Gewichtsprozent des Homopolymers enthielt. Die Membran wurde nach der oben unter "Allgemeine Beschreibung der Durchführung" stehenden Vorschrift (Dosis 100 kGy (entspricht 100 kJ/kg)) modifiziert und wies nach Extraktion mit Isopropanol (IPA) und Wasser die in Tabelle 9 aufgeführten Eigenschaften auf. Die Referenzmembran wurde lediglich mit IPA und Wasser extrahiert, ohne vorher mit Imprägnierlösung und/oder Elektronenstrahlung behandelt worden zu sein; eine weitere Referenzmembran wurde nach Imprägnierung mit Wasser bestrahlt und anschließend mit IPA und Wasser extrahiert.

**Tabelle 9:**

| Imprägn. | Dosis /kGy | TASZ /s | Proteinbindung /(µg/cm²) | Permeabilität /(l/(h•m²•bar) | Oberflächenspannung /(mN/m) | TASZ Soxhlet /s |
|---|---|---|---|---|---|---|
| Wasser | 100 | 144 | 30 | 225 | 74** | 145 |
| keine | 0 | 113,2 | 24 | 250 | 72* | 155 |
| Polyethyloxazolin, 3% | 100 | 103 | 4,2 | 98 | 78** | 150 |

| | | | | | | |
|---|---|---|---|---|---|---|
| Oberflächenspannung wurde bestimmt mit ** wässriger CaCl₂-Lösung (16,3 Gew%) bzw. * mit Wasser | | | | | | |

Die modifizierte Membran weist im Vergleich zu den Referenzmembranen eine erhöhte Oberflächenspannung auf. Folglich wird die Ausgangsmembran durch die elektronenstrahlinduzierte Modifizierung nach Imprägnierung mit einer wässrigen Lösung von Polyethyloxazolin permanent hydrophilisiert, ohne dass eine vorherige Zersetzung der Ausgangsmembran auftritt. Ferner wird die unspezifische Proteinbindung der Membran durch diese Modifizierung deutlich reduziert.

### 10) Polyethylenglykol 4000 auf einer Membran des Typs 15404 (Vergleichsbeispiel)

Die Imprägnierung der Ausgangsmembran des Typs 15404 erfolgte mit einer Lösung von Pluriol^{®} 4000, erhältlich bei der Firma BASF (Polyethylenglykol mit einer mittleren Molmassse 4000 g/mol), in Reverse-Osmose-(RO-)Wasser, welche 1,0 Gewichtsprozent des Homopolymers enthielt. Die Membran wurde nach der oben unter "Allgemeine Beschreibung der Durchführung" stehenden Vorschrift (Dosis 75 kGy (entspricht 75 kJ/kg)) modifiziert und wies nach Extraktion mit Isopropanol (IPA) und Wasser die in Tabelle 10 aufgeführten Eigenschaften auf. Die Referenzmembran wurde lediglich mit IPA und Wasser extrahiert, ohne vorher mit Imprägnierlösung und/oder Elektronenstrahlung behandelt worden zu sein; eine weitere Referenzmembran wurde nach Imprägnierung mit Wasser bestrahlt und anschließend mit IPA und Wasser extrahiert:

**Tabelle 10:**

| Imprägn. | Dosis /kGy | TASZ /s | Proteinbindung /(µg/cm²) | Permeabilität /(l/(h•m²•bar) | Oberflächenspannung /(mN/m) | TASZ Soxhlet /s |
|---|---|---|---|---|---|---|
| Wasser | 75 | 4 | 9,0 | 6,13•10⁴ | 72* | 19±6 |
| keine | 0 | 2,8 | 1,4 | 5,96•10⁴ | 72* | >300 |
| Pluriol^{®} 4000,1% | 75 | 2,5 | 3,6 | 6,05•10⁴ | 95** | 4 |

| | | | | | | |
|---|---|---|---|---|---|---|
| Oberflächenspannung wurde bestimmt mit ** wässriger CaCl₂-Lösung (42.7 Gew%) bzw. * mit Wasser | | | | | | |

Die modifizierte Membran weist im Vergleich zu den Referenzmembranen eine deutlich erhöhte Oberflächenspannung auf, insbesondere auch nach 72-stündiger Soxhlet-Extraktion mit Ethanol. Folglich wird die Ausgangsmembran durch die elektronenstrahlinduzierte Modifizierung nach Imprägnierung mit einer wässrigen Lösung von Pluriol^{®} 4000 permanent hydrophilisiert, ohne dass eine vorherige Zersetzung der Ausgangsmembran auftritt. Ferner wird die Oberflächenspannung gleichzeitig drastisch erhöht. Dabei wird der Fluss durch die Modifizierung nicht signifikant gegenüber der Ausgangs- bzw. Referenzmembran verringert.

## Patentansprüche

1. Verfahren zur Herstellung einer mikroporösen Membran, auf deren Oberfläche ein durch Elektronenstrahlung vernetztes Polymer fixiert ist, wobei das Verfahren die Schritte umfasst:
a) das Bereitstellen einer mikroporösen Ausgangsmembran,
b) das Imprägnieren der Membran mit einer Imprägnierlösung, umfassend ein Lösungsmittel sowie ein darin gelöstes oder dispergiertes Polymer, um eine imprägnierte Membran bereitzustellen, und
c) das Bestrahlen der imprägnierten Membran mit Elektronenstrahlung, um eine mikroporöse Membran, auf deren Oberfläche das durch Elektronenstrahlung vernetzte Polymer fixiert ist, bereitzustellen,
wobei in Schritt b) ein Polymer verwendet wird, welches ein organischer Stoff ist, der eine mittlere Molmasse von mindestens 500 g/mol hat, und welches aus der Gruppe, bestehend aus perfluorierten Kohlenwasserstoffen sowie Gemischen davon, ausgewählt ist, und
wobei die Elektronenbestrahlung mit einer Dosis von 1 bis 300 kGy erfolgt.

2. Verfahren nach Anspruch 1, wobei das Verfahren vor dem Schritt b) des Imprägnierens weiter den Schritt umfasst:
d) das Vorbehandeln der mikroporösen Ausgangsmembran mit einem Vorbenetzungsmedium.

3. Verfahren nach Anspruch 2, wobei das Vorbenetzungsmittel aus der Gruppe, bestehend aus Alkoholen, Ketonen sowie Kombinationen davon, ausgewählt ist.

4. Verfahren nach einem der Ansprüche 1 bis 3, wobei das Verfahren nach dem Schritt c) des Bestrahlens weiter die Schritte umfasst:
e) das Extrahieren der mikroporösen Membran, auf deren Oberfläche ein durch Elektronenstrahlung vernetztes Polymer fixiert ist, mit einem Extraktionsmittel, um eine extrahierte Membran bereitzustellen, und
f) das Trocknen der extrahierten Membran.

5. Verfahren nach Anspruch 4, wobei das Extraktionsmittel aus der Gruppe, bestehend aus Wasser, Alkoholen, Ketonen sowie Kombinationen davon, ausgewählt ist.

6. Verfahren nach Anspruch 4 oder 5, wobei die extrahierte Membran für eine Dauer von 6 Sekunden bis 120 Minuten bei einer Temperatur im Bereich von 60 bis 190°C getrocknet wird.

7. Verfahren nach einem der Ansprüche 1 bis 6, wobei die mikroporöse Ausgangsmembran aus einem Material besteht, ausgewählt aus der Gruppe, bestehend aus Polysulfon, Polyethersulfon, Celluloseacetat, Cellulosenitrat, Polyvinylidenfluorid, Polypropen, Polyethen, Polytetrafluorethen, Polyamid, Copolymeren von diesen, sowie Gemischen davon.

8. Verfahren nach einem der Ansprüche 1 bis 7, wobei in Schritt b) ein Lösungsmittel, ausgewählt aus der Gruppe, bestehend aus Wasser, Alkoholen, Ketonen, Hydrofluorethern sowie Gemischen davon, verwendet wird.

9. Verfahren nach Anspruch 8, wobei in Schritt b) Wasser oder ein Gemisch aus Wasser und Butanol als Lösungsmittel verwendet wird.

10. Verfahren nach einem der Ansprüche 1 bis 9, wobei die Imprägnierlösung von 0,01 bis 20 Gew.-% des Polymers enthält.

11. Mikroporöse Membran, auf deren Oberfläche ein durch Elektronenstrahlung vernetztes Polymer fixiert ist, hergestellt durch das Verfahren nach einem der Ansprüche 1 bis 10.

12. Verwendung der mikroporösen Membran nach Anspruch 11 als Membranfilter in der Hämodialyse, in der Virusfiltration und/oder in der Sterilfiltration.

## Claims

1. Method for producing a microporous membrane, on whose surface a polymer crosslinked by electron beam radiation is fixed, wherein the method comprises the steps of:
a) providing a microporous starting membrane,
b) impregnating the membrane with an impregnating solution comprising a solvent and a polymer dissolved or dispersed therein to provide an impregnated membrane, and
c) irradiating the impregnated membrane with electron beam radiation to provide a microporous membrane, on whose surface the polymer crosslinked by electron beam radiation is fixed,
wherein in step b) a polymer is used which is an organic substance which has an average molecular weight of at least 500 g/mol and which is selected from the group consisting of perfluorinated hydrocarbons and mixtures thereof, and
wherein the electron irradiation is effected using a dose in the range of 1 to 300 kGy.

2. Method as claimed in claim 1, wherein the method prior to the impregnating step b) further comprises the step of:
d) pretreating the microporous starting membrane with a pre-wetting medium.

3. Method as claimed in claim 2, wherein the pre-wetting medium is selected from the group consisting of alcohols, ketones and combinations thereof.

4. Method as claimed in any one of claims 1 to 3, wherein the method after the irradiating step c) further comprises the steps of:
e) extracting the microporous membrane, on whose surface a polymer crosslinked by electron beam radiation is fixed, with an extracting agent to provide an extracted membrane, and
f) drying the extracted membrane.

5. Method as claimed in claim 4, wherein the extracting agent is selected from the group consisting of water, alcohols, ketones and combinations thereof.

6. Method as claimed in claim 4 or 5, wherein the extracted membrane is dried at a temperature in the range from 60 to 190°C for a period ranging from 6 seconds to 120 minutes.

7. Method as claimed in any one of claims 1 to 6, wherein the microporous starting membrane consists of a material selected from the group consisting of polysulfone, polyether sulfone, cellulose acetate, cellulose nitrate, polyvinylidene fluoride, polypropene, polyethylene, polytetrafluoroethylene, polyamide, copolymers thereof and mixtures thereof.

8. Method as claimed in any one of claims 1 to 7, wherein in step b) a solvent is used which is selected from the group consisting of water, alcohols, ketones, hydrofluoroethers and mixtures thereof.

9. Method as claimed in claim 8, wherein in step b) water or a mixture of water and butanol is used as a solvent.

10. Method as claimed in any one of claims 1 to 9, wherein the impregnating solution contains from 0.01 % to 20% by weight of the polymer.

11. Microporous membrane, on whose surface a polymer crosslinked by electron beam radiation is fixed, produced by the method as claimed in any one of claims 1 to 10.

12. Use of the microporous membrane as claimed in claim 11 as a membrane filter in haemodialysis, virus filtration and/or sterile filtration.

## Revendications

1. Procédé de production d'une membrane microporeuse, à la surface de laquelle un polymère réticulé par un rayonnement électronique est fixé, le procédé comprenant les étapes suivantes :
a) la préparation d'une membrane de départ microporeuse,
b) l'imprégnation de la membrane avec une solution d'imprégnation, comprenant un solvant et un polymère dissous ou dispersé dans celui-ci, pour préparer une membrane imprégnée, et
c) l'irradiation de la membrane imprégnée avec un rayonnement électronique, pour préparer une membrane microporeuse à la surface de laquelle le polymère réticulé par un rayonnement électronique est fixé,
un polymère étant utilisé à l'étape b), lequel est une substance organique qui a une masse molaire moyenne d'au moins 500 g/mole et qui est choisi dans le groupe consistant en hydrocarbures perfluorés et leurs mélanges, et dans lequel le rayonnement électronique s'effectue à une dose de 1 à 300 kGy.

2. Procédé selon la revendication 1, le procédé comprenant, avant l'étape b) d'imprégnation, l'autre étape suivante :
d) le prétraitement de la membrane de départ microporeuse avec un milieu de pré-mouillage.

3. Procédé selon la revendication 2, l'agent de pré-mouillage étant choisi dans le groupe consistant en les alcools, les cétones et leurs combinaisons.

4. Procédé selon l'une des revendications 1 à 3, le procédé comprenant, après l'étape c) d'irradiation, les autres étapes suivantes :
e) l'extraction de la membrane microporeuse sur la surface de laquelle un polymère réticulé est fixé par rayonnement électronique, avec un milieu d'extraction pour préparer une membrane extraite, et
f) le séchage de la membrane extraite.

5. Procédé selon la revendication 4, le milieu d'extraction étant choisi dans le groupe consistant en l'eau, les alcools, les cétones et leurs combinaisons.

6. Procédé selon la revendication 4 ou 5, la membrane extraite étant séchée pendant une durée de 6 secondes à 120 minutes à une température dans la plage de 60 à 190 °C.

7. Procédé selon l'une des revendications 1 à 6, la membrane de départ microporeuse consistant en un matériau choisi dans le groupe consistant en la polysulfone, la polyéthersulfone, l'acétate de cellulose, le nitrate de cellulose, le fluorure de polyvinylidène, le polypropène, le polyéthène, le polytétrafluoro-éthène, le polyamide, les copolymères de ceux-ci et leurs mélanges.

8. Procédé selon l'une des revendications 1 à 7, un solvant choisi dans le groupe consistant en l'eau, les alcools, les cétones, les hydrofluoroéthers et leurs mélanges étant utilisé à l'étape b).

9. Procédé selon la revendication 8, de l'eau ou un mélange d'eau et de butanol étant utilisé comme solvant à l'étape b).

10. Procédé selon l'une des revendications 1 à 9, la solution d'imprégnation contenant de 0,01 à 20 % en poids de polymère.

11. Membrane microporeuse à la surface de laquelle un polymère réticulé par un rayonnement électronique est fixé, produite par le procédé selon l'une des revendications 1 à 10.

12. Utilisation de la membrane microporeuse selon la revendication 11 comme filtre à membrane dans l'hémodialyse, dans la filtration de virus et/ou dans la filtration stérile.
